# EUROPÄISCHE PATENTSCHRIFT

(11) **EP 2 236 970 B1**
(45) Veröffentlichungstag und Bekanntmachung des Hinweises auf die Patenterteilung: **14.09.2016**
(21) Anmeldenummer: 10000916.6
(22) Anmeldetag: 29.01.2010
(51) Int. Cl.: F28D 20/02

(54) **Wärmespeicher mit einem Phasenwechselmaterial und Verfahren zu dessen Herstellung**
Heat exchanger with a phase change material and method for its manufacture
Accumulateur thermique doté d'un matériau à changement de phase et son procédé de fabrication

(30) Priorität: 30.01.2009 DE 102009006788
(43) Veröffentlichungstag der Anmeldung: 06.10.2010
(73) Patentinhaber: TuTech Innovation GmbH, 21079 Hamburg (DE); Technische Universität Hamburg-Harburg, 21073 Hamburg (DE)
(72) Erfinder: Dietl, Karin, 20099 Hamburg (DE); Emmelmann, Claus, 21220 Seevetal (DE); Rehme, Olaf, 20148 Hamburg (DE); Schmitz, Gerhard, 21079 Hamburg (DE)
(74) Vertreter: Hauck Patentanwaltspartnerschaft mbB

(56) Entgegenhaltungen:
- EP-A2- 0 165 596
- GB-A- 2 419 463
- JP-A- 63 243 693
- US-B1- 7 382 959

## Beschreibung

Die Erfindung betrifft einen Wärmespeicher mit einem Gehäuse, in dem ein Phasenwechselmaterial und eine von dem Phasenwechselmaterial umgebene Wärmeleitstruktur angeordnet ist, sowie ein Verfahren zur Herstellung eines derartigen Wärmespeichers. Wärmespeicher mit einem Phasenwechselmaterial (englisch PCM, phase change material) werden auch als Latentwärmespeicher bezeichnet. Sie können thermische Energie aufnehmen und unter Ausnutzung eines Phasenübergangs des Phasenwechselmaterials speichern und wieder abgeben. Bei dem Phasenübergang, beispielsweise von fest zu flüssig, kann eine relativ große, der Schmelzenthalpie entsprechende Wärmemenge aufgenommen werden, ohne dass es zu einem Temperaturanstieg kommt. Als Phasenwechselmaterial werden häufig Salze oder Paraffine verwendet, die eine hohe Schmelzenthalpie, jedoch eine relativ geringe Wärmeleitfähigkeit aufweisen. Insbesondere wenn Wärme schnell abtransportiert werden soll, z. B. in der Leistungselektronik, ist es wegen der geringen Wärmeleitfähigkeit schwierig, einen ausreichend schnellen Wärmetransport in das Phasenwechselmaterial hinein zu erzielen.

Angesichts dieses Problems sind unterschiedliche Lösungen vorgeschlagen worden, die auf einen verbesserten Wärmetransport innerhalb des Wärmespeichers abzielen. Beispielsweise ist es aus der Druckschrift AT 363 963 B bekannt, die Wärme über eine aufgewirbelte Flüssigkeit innerhalb des Latentwärmespeichers zu verteilen. Einen vergleichbaren Ansatz verfolgt die Druckschrift DD 256 434 A3, wobei ein verdampfendes Wärmetransportmittel das Phasenwechselmaterial durchströmt. Alternativ ist es bekannt, zur besseren Verteilung der Wärme innerhalb des Wärmespeichers eine fest angeordnete Wärmeleitstruktur einzusetzen. Hierzu schlägt die Druckschrift DE 198 15 777 A1 vor, ein Wärmeträgermedium, über das die Wärme in den Wärmespeicher eingebracht wird, durch wellenförmig durch das Phasenwechselmaterial geführte flache Rohre zu leiten und die zwischen den Rohren befindlichen Räume mit platten- oder rippenförmigen, gut wärmeleitenden Platten zu belegen. Die Druckschrift DE 100 07 848 A1 sieht vor, das Phasenwechselmaterial in eine Matrix aus Metallschaum einzubetten. Der Metallschaum ist offenporig und weist eine verglichen mit dem Phasenwechselmaterial hohe Wärmeleitfähigkeit auf. Schließlich ist es aus der Druckschrift DE 20 2007 005 965 U1 bekannt, als Wärmeleitstruktur ein thermisch gut wärmeleitendes, dreidimensionales Geflecht aus Drähten oder sonstigen Fasern zu verwenden. Das Geflecht hat bevorzugt eine wollartig gekräuselte oder chaotische Struktur.

Aus der Druckschrift DE 40 21 492 C2 ist ein Latentwärmespeicher mit einem Gehäuse und einem Phasenwechselmaterial bekannt geworden. Im Innenraum des Gehäuses ist ein von dem Phasenwechselmaterial benetzbares Material angeordnet, das eine offenporige Struktur hat und mit dem Phasenwechselmaterial getränkt ist.

Aus der Druckschrift WO 2006/046022 A1 ist ein Kühlkörper für ein Halbleiterauelement bekannt geworden. Der bekannte Kühlkörper weist ein Raumgitter aus an den Knotenpunkten des Raumgitters materialeinheitlich ineinander übergehenden Metallstäben auf, das in thermischem Kontakt mit dem Halbleiterbauelement gebracht wird. Zur Kühlung wird Luft mit einem Ventilator durch das Gitter geblasen. Zusätzlich befindet sich innerhalb des Raumgitters eine von dem Gitter getrennte Leitung, durch die eine Kühlflüssigkeit hindurchgeführt werden kann.

Aus der Druckschrift JP 63161300 A ist ein Wärmespeicher mit einem Gehäuse, in dem ein Phasenwechselmaterial angeordnet ist, bekannt. In dem Gehäuse ist ein geschäumtes Aluminiummaterial angeordnet, das eine poröse Struktur aufweist.

Aus der Druckschrift DE 101 23 456 A1 ist ein Wärmetauscher bekannt geworden, der einen offenporigen Metallschaum aufweist, der von einem zu kühlenden, flüssigen Medium durchströmt wird.

Aus der Druckschrift US 4,625,710 ist ein plattenförmiger Wärmespeicher bekannt geworden, bei dem zwischen zwei Platten eine Wabenstruktur aus miteinander verbundenen Zellen ausgebildet ist, in die ein Phasenwechselmaterial eingefüllt werden kann.

Aus der Druckschrift JP 63 243693 A ist ein Wärmetauscher mit wärmespeichernden Eigenschaften bekannt geworden. In einem Gehäuse des bekannten Wärmetauschers ist eine Wärmeleitstruktur aus porösem Metall angeordnet. JP 63 243 693 zeigt ein Wärmespeicher nach dem Oberbegriff des Anspruchs 1.

Aus der Druckschrift GB 2 419 463 A ist ein Kühlkörper für ein Halbleiterbauelement bekannt geworden. Der bekannte Kühlkörper weist ein Raumgitter aus an den Knotenpunkten des Raumgitters materialeinheitlich ineinander übergehenden Metallstäben auf, das in thermischen Kontakt mit dem Halbleiterbauelement gebracht wird. Zur Kühlung wird Luft mit einem Ventilator durch das Gitter gefördert. Zusätzlich kann sich innerhalb des Raumgitters eine von dem Gitter getrennte Leitung, durch die eine Kühlflüssigkeit hindurch geführt werden kann, befinden.

Davon ausgehend ist es die Aufgabe der Erfindung, einen Wärmespeicher mit einem Gehäuse, in dem ein Phasenwechselmaterial und eine von dem Phasenwechselmaterial umgebene Wärmeleitstruktur angeordnet ist, zur Verfügung zu stellen, bei dem ein effizienterer Wärmetransport möglich ist.

Diese Aufgabe wird gelöst durch den Wärmespeicher mit den Merkmalen des Anspruchs 1 sowie durch das Verfahren zur Herstellung eines Wärmespeichers mit den Merkmalen des Anspruchs 10. Vorteilhafte Ausgestaltungen sind in den sich jeweils anschließenden Unteransprüchen angegeben.

Der erfindungsgemäße Wärmespeicher hat ein Gehäuse, in dem ein Phasenwechselmaterial und eine von dem Phasenwechselmaterial umgebene Wärmeleitstruktur angeordnet ist, wobei die Wärmeleitstruktur ein Raumgitter aus an den Knotenpunkten des Raumgitters materialeinheitlich ineinander übergehenden Stäben aufweist. Die Stäbe können gradlinige Verbindungen zwischen den gedachten Gitterpunkten des Raumgitters sein. Das Raumgitter weist eine regelmäßige, dreidimensionale Anordnung der Stäbe auf. Die Regelmäßigkeit des Raumgitters kann insbesondere darin bestehen, dass eine elementare Gitterzelle definiert werden kann, die eine Anzahl der Stäbe aufweist und die in alle drei Raumrichtungen wiederholt aneinandergereiht das Raumgitter ergibt. Dass die Stäbe materialeinheitlich ineinander übergehen bedeutet, dass sie nicht durch ein anderes Material wie einen Klebstoff oder ein Lot oder durch eine Grenzfläche voneinander getrennt sind. Dies führt dazu, dass auch an den Knotenpunkten des Raumgitters ein ungehinderter Wärmetransport möglich ist. In Verbindung mit der Regelmäßigkeit des Raumgitters wird dadurch ein hoch effizienter und über den gesamten von dem Raumgitter abgedeckten Bereich gleichmäßiger Wärmetransport erzielt. Dabei wird die weitergeleitete Wärme von der Wärmeleitstruktur unmittelbar in das umgebende Phasenwechselmaterial abgeführt. Auch dabei ist die Regelmäßigkeit des Raumgitters von Vorteil, weil das Phasenwechselmaterial innerhalb jeder Gitterzelle gleichmäßig weit von den Stäben beabstandet ist. Ein weiterer Vorteil der Raumgitteranordnung der Stäbe ist, dass innerhalb des Phasenwechselmaterials keine Trennwände vorhanden sind, an denen sich beispielsweise Gasblasen ansammeln könnten. Auch dadurch trägt die Raumgitterstruktur zu innerhalb des gesamten Volumens gleichmäßigen Verhältnissen bei.

Schließlich ist die Raumgitteranordnung der Stäbe außerordentlich flexibel und kann beispielsweise durch Variieren der Größe der Gitterzellen oder der Anzahl und Abmessung der Stäbe vielfältig variiert werden, um unterschiedlichen Anforderungen gerecht zu werden. Beispielsweise kann eine Anwendung einen besonders schnellen Wärmetransport erfordern, was z. B. durch besonders hohe Wärmeleitfähigkeit der Wärmeleitstruktur, beispielsweise unter Verwendung relativ dicker Stäbe, erreicht werden kann, während es bei einer anderen Anwendung stärker auf die insgesamt speicherbare Wärmemenge ankommen kann. Hierfür bieten sich Wärmeleitstrukturen mit einem Raumgitter an, das einen geringen Anteil des Volumens innerhalb des Wärmespeichers einnimmt, um entsprechend mehr Phasenwechselmaterial innerhalb des gleichen Volumens einsetzen zu können. Beide genannten Anwendungsfälle sind vor dem Hintergrund der jeweiligen Anforderungen hinsichtlich der erzielten Wärmeleitfähigkeit besonders effizient.

Die Gesamtabmessungen eines erfindungsgemäßen Wärmespeichers können beispielsweise bis zu 250 mm x 250 mm x 250 mm betragen. Abhängig vom gewählten Herstellungsverfahren sind auch noch größere Abmessungen möglich. Bevorzugt können die erfindungsgemäßen Wärmespeicher jedoch besonders kompakt gehalten werden und dementsprechend deutlich geringere Abmessungen aufweisen.

In einer Ausgestaltung besteht das Raumgitter aus Metall. Metalle weisen eine hohe spezifische Wärmeleitfähigkeit auf und lassen sich gut verarbeiten. Sie sind daher für den erfindungsgemäßen Wärmespeicher besonders gut geeignet. Grundsätzlich kommen jedoch auch andere Werkstoffe, beispielsweise Kohlefasern oder Kunststoffmaterialien mit einer ausreichenden Wärmeleitfähigkeit in Betracht.

In einer Ausgestaltung entsprechen die Abmessungen der Knotenpunkte dem Querschnitt der Stäbe. Mit anderen Worten sind die Knotenpunkte gegenüber dem Querschnitt der Stäbe insbesondere nicht verdickt. Dadurch wird eine der Wärmeleitfähigkeit der Stäbe entsprechende Wärmeleitfähigkeit auch an den Knotenpunkten erreicht, ohne dass eine raumgreifende Materialanhäufung erforderlich ist.

Gemäß einer Ausgestaltung weist das Raumgitter in jeder Gitterzelle mindestens einen diagonal verlaufenden Stab auf. Grundsätzlich kann auch ein einfaches, beispielsweise rechtwinklig kubisches Gitter verwendet werden. Zusätzlich diagonal verlaufende Stäbe können den Wärmetransport jedoch gezielt entlang vorgegebener Richtungen verbessern und gleichzeitig die mechanische Festigkeit des Raumgitters dadurch erhöhen, dass in das Raumgitter eingeleitete Kräfte bevorzugt als Zug- und Druckkräfte, nicht als unvorteilhafte Biegekräfte wirken.

Gemäß einer Ausgestaltung ist ein Durchmesser der Stäbe kleiner als 1 mm und/oder die Größe der Gitterzellen ist kleiner als 10 mm. Bevorzugt werden noch kleinere Abmessungen gewählt, beispielsweise ein Stabdurchmesser von weniger als 0,5 mm, beispielsweise von nur 0,1 mm und eine Größe der Gitterzellen von weniger als 5 mm, beispielsweise von 1 mm. Derartig filigrane Raumgitter stellen eine nahezu lückenlose Durchdringung des Phasenwechselmaterials sicher. Dadurch kann die Wärme besonders schnell an das Phasenwechselmaterial abgeführt werden.

Bei der Erfindung weist die Wärmeleitstruktur mindestens zwei Teilbereiche auf, die jeweils ein Raumgitter aus an den Knotenpunkten des Raumgitters materialeinheitlich ineinander übergehenden Stäben aufweisen, wobei das Verhältnis zwischen Wärmeleitfähigkeit des Raumgitters und Oberflächengröße des Raumgitters bei den beiden Raumgittern unterschiedlich ist. Eine hohe Wärmeleitfähigkeit des Raumgitters ermöglicht einen schnellen Wärmetransport. Eine große Oberfläche des Raumgitters verbessert hingegen den Wärmeaustausch mit dem Phasenwechselmaterial. In der genannten Ausgestaltung wird in unterschiedlichen Teilbereichen der Wärmeleitstruktur ein jeweils unterschiedlicher Kompromiss zwischen diesen beiden anzustrebenden Größen gewählt. Durch die Ausbildung unterschiedlicher Teilbereiche innerhalb des Wärmespeichers gelingt es, speziellen Anforderungen noch besser gerecht zu werden. Insbesondere kann einem in einem Teilbereich besonders hohen Wärmeeintrag durch eine besonders hohe Wärmeleitfähigkeit in diesem Teilbereich Rechnung getragen werden, während in einem anderen, beispielsweise von einer Wärmequelle weiter entfernten Bereich bevorzugt der Wärmeeintrag in das Phasenwechselmaterial optimiert wird.

Das Verhältnis zwischen Wärmeleitfähigkeit des Raumgitters und Oberflächengröße des Raumgitters kann auf ganz unterschiedliche Weise angepasst werden. In einer Ausgestaltung weisen die beiden Raumgitter zu diesem Zweck eine unterschiedliche Topologie auf. D. h., dass sich die beiden Raumgitter hinsichtlich der Anzahl und/oder Anordnung der Stabverbindungen zwischen den gedachten Gitterpunkten unterscheiden. Beispielsweise kann für eine hohe Wärmeleitfähigkeit vorgesehen sein, innerhalb jeder Gitterzelle zusätzliche Stäbe vorzusehen. Gemäß einer anderen Ausgestaltung sind die Gitterzellen eines der beiden Raumgitter kleiner als die Gitterzellen des anderen Raumgitters. Durch eine Verkleinerung der Gitterzellen wird bei im übrigen gleichbleibender Dimensionierung der Stäbe insbesondere die Größe der Oberfläche des Raumgitters erhöht. In einer weiteren Ausgestaltung weisen die Stäbe eines der beiden Raumgitter einen anderen Querschnitt auf als die Stäbe des anderen Raumgitters. Insbesondere durch Vergrößerung des Querschnitts der Stäbe kann die Wärmeleitfähigkeit des Raumgitters unmittelbar erhöht werden.

In einer Ausgestaltung ist eine Kontaktfläche zum Wärmeaustausch mit einer Wärmequelle oder -senke vorhanden und das Verhältnis zwischen Wärmeleitfähigkeit des Raumgitters bzw. der Raumgitter und Oberflächengröße des Raumgitters bzw. der Raumgitter wird mit zunehmendem Abstand von der Kontaktfläche kleiner. Auch durch diese Maßnahme kann der Wärmetransport innerhalb des Wärmespeichers gezielt an die jeweiligen Anforderungen angepasst werden. Zur Beeinflussung des Verhältnisses zwischen Wärmeleitfähigkeit und Oberflächengröße des Raumgitters können insbesondere die vorstehend aufgeführten Kenngrößen des Raumgitters variiert werden. Zusätzlich oder alternativ zu unterschiedlichen Teilbereichen, in denen jeweils über den jeweiligen Teilbereich gleichmäßig ausgebildete Raumgitter vorgesehen sind, können die genannten Einflussgrößen, beispielsweise die Größe der Gitterzellen oder die Querschnitte der Stäbe innerhalb einer einzigen Raumgitterstruktur, kontinuierlich variiert werden. Durch eine solche "Gradierung" kann ein fließender Verlauf der maßgeblichen Eigenschaften des Gitters erreicht werden.

In einer weiteren Ausgestaltung geht die Kontaktfläche materialeinheitlich in die Stäbe der Wärmeleitstruktur über. Auf diese Weise wird ein optimaler Wärmetransport von der Kontaktfläche in die Raumgitterstruktur erreicht.

In einer weiteren Ausgestaltung gehen geschlossene Wandflächen des Gehäuses materialeinheitlich in die Wärmeleitstruktur über. Dadurch liegt auch zwischen den Wänden des Gehäuses und der Wärmeleitstruktur ein optimaler Wärmetransport vor. Zusätzlich wird eine hohe mechanische Stabilität erzielt, weil die Wärmeleitstruktur die Wandung des Gehäuses optimal stützt.

Die obige Aufgabe wird ebenfalls gelöst durch das Verfahren mit den Merkmalen des Anspruchs 10. Das Verfahren dient zur Herstellung eines Wärmespeichers mit einem Gehäuse, in dem ein Phasenwechselmaterial und eine von dem Phasenwechselmaterial umgebene Wärmeleitstruktur angeordnet ist, und weist die folgenden Schritte auf:
a) Bereitstellen eines pulverförmigen Werkstoffs am Ort der herzustellenden Wärmeleitstruktur,
b) Verschmelzen definierter Bereiche des pulverförmigen Werkstoffs durch thermische Einwirkung eines energetischen Strahls,
c) Wiederholen der Schritte a) und b), bis die verschmolzenen Bereiche zwei Teilbereiche mit jeweils einem Raumgitter (18, 20, 22) aus an den Knotenpunkten des Raumgitters (18, 20, 22) materialeinheitlich ineinander übergehenden Stäben bilden, wobei das Verhältnis zwischen Wärmeleitfähigkeit des
   Raumgitters (18, 20, 22) und Oberflächengröße des Raumgitters (18, 20, 22) bei den beiden Raumgittern (18, 20, 22) unterschiedlich ist und die Stäbe in beiden Raumgittern (18, 20, 22) eine regelmäßige, dreidimensionale Anordnung aufweisen,
d) Entfernen des nicht verschmolzenen pulverförmigen Werkstoffs,
e) Einbringen des Phasenwechselmaterials, so dass es die Wärmeleitstruktur umgibt.

Das dem Herstellungsverfahren zugrundeliegende Fertigungsverfahren wird, wenn als energetischer Strahl ein Laserstrahl verwendet wird, allgemein als Lasergenerierverfahren bezeichnet. Der energetische Strahl kann alternativ auch beispielsweise ein Elektronenstrahl sein. Als pulverförmiger Werkstoff wird insbesondere ein metallisches Pulver, beispielsweise ein Edelstahl- oder Aluminiumpulver mit einer Korngrößenverteilung zwischen 5 und 50 µm verwendet. Durch das Verschmelzen durch thermische Einwirkung eines Laserstrahls gemäß Verfahrensschritt b) entsteht ein durchgängig aus einem einheitlichen Material bestehender Körper. Lasergenerierverfahren erlauben die Herstellung auch komplexer Geometrien, insbesondere komplexe innenliegende Freiformflächen sind möglich. Die Definition der zu verschmelzenden Bereiche kann unmittelbar aus einem zugehörigen 3D-CAD-Datensatz übernommen werden. Der Laserstrahl kann durch mindestens einen drehbar gelagerten Spiegel, eine sogenannte Scanner-Spiegeloptik, an die jeweilige Wirkstelle umgelenkt werden.

In einer Ausgestaltung des Verfahrens wird der pulverförmige Werkstoff im Schritt a) in einer dünnen Schicht auf eine horizontale Grundfläche bzw. auf eine zuvor aufgetragene Schicht des pulverförmigen Werkstoffs aufgetragen. Beispielsweise kann die erste Schicht des Werkstoffs, die eine Dicke von beispielsweise mindestens 20 µm aufweist, auf eine Bauplattform aufgetragen werden. Nach dem gezielten Verschmelzen des pulverförmigen Werkstoffs in dieser ersten Schicht kann die Bauplattform um eine der Schichtdicke entsprechende Strecke abgesenkt werden, und eine zweite Schicht des pulverförmigen Werkstoffs kann auf die bereits teilweise verschmolzene Schicht aufgebracht werden. Das Auftragen der Pulverschichten kann beispielsweise mit einer Walze oder einem Wischer erfolgen. Dieses auch als Selective Laser Melting (SLM) bezeichnete Verfahren eignet sich insbesondere hervorragend zur Herstellung kleinster Strukturen, beispielsweise Raumgitter mit einem Stabdurchmesser von 0,2 mm.

In einer anderen Variante des Verfahrens wird der pulverförmige Werkstoff im Schritt a) gezielt in einer Umgebung des Laserstrahl-Fokuspunkts zugeführt und Schritt b) wird im wesentlichen gleichzeitig ausgeführt. Zur Zufuhr des pulverförmigen Werkstoffs kann eine koaxial angeordnete Zufuhrdüse eingesetzt werden. Der Aufbau des Werkstücks kann ebenfalls schichtweise erfolgen.

In einer Ausgestaltung des Verfahrens wird der pulverförmige Werkstoff in Schritt d) zusätzlich in Bereichen verschmolzen, die geschlossene Gehäusewände bilden. Es ist dadurch eine gemeinsame Fertigung der Wärmeleitstruktur und des Gehäuses möglich, wobei beide automatisch materialeinheitlich ineinander übergehen.

Gemäß einer Ausgestaltung des Verfahrens verbleiben nach Abschluss des Schritts c) mindestens zwei Öffnungen in den Gehäusewänden, durch die das verbleibende Pulver entfernt und das Phasenwechselmaterial eingebracht wird. Im übrigen können die Gehäusewände vollständig geschlossen sein. Das nicht verschmolzene Pulver kann durch die Öffnungen beispielsweise ausgeblasen oder ausgespült werden. Bevorzugt befinden sich die beiden Öffnungen in Bereichen des Gehäuses, die nicht zugleich als Kontaktfläche zu einem die Wärme einbringenden oder abgebenden Medium dienen.

Gemäß einer Ausgestaltung wird im Schritt e) das Phasenwechselmaterial in flüssigem Zustand eingebracht. Das Einbringen der Flüssigkeit kann insbesondere durch eine der beiden verbliebenen Öffnungen erfolgen, wobei die zweite Öffnung je nach Anordnung gegebenenfalls vor dem Befüllen zu verschließen ist. Nach dem Einfüllen des Materials kann auch die zweite Öffnung geschlossen werden, so dass ein späteres Entweichen des Phasehwechselmaterials ausgeschlossen ist.

Bevorzugt wird das Verfahren so ausgeführt, dass der hergestellte Wärmespeicher gemäß einer der vorstehend erläuterten Ausgestaltungen ausgebildet ist.

Hinsichtlich der mit dem erfindungsgemäßen Verfahren zu erreichenden Vorteile wird auf die obige Erläuterung des herzustellenden Wärmespeichers verwiesen.

Die Erfindung wird nachfolgend anhand eines in einer Figur dargestellten Ausführungsbeispiels näher erläutert. Die einzige Figur zeigt einen erfindungsgemäßen Wärmespeicher in einer vereinfachten schematischen Draufsicht, in der eine Gehäusewand entfernt ist, um den Einblick in das Innere des Wärmespeichers freizugeben.

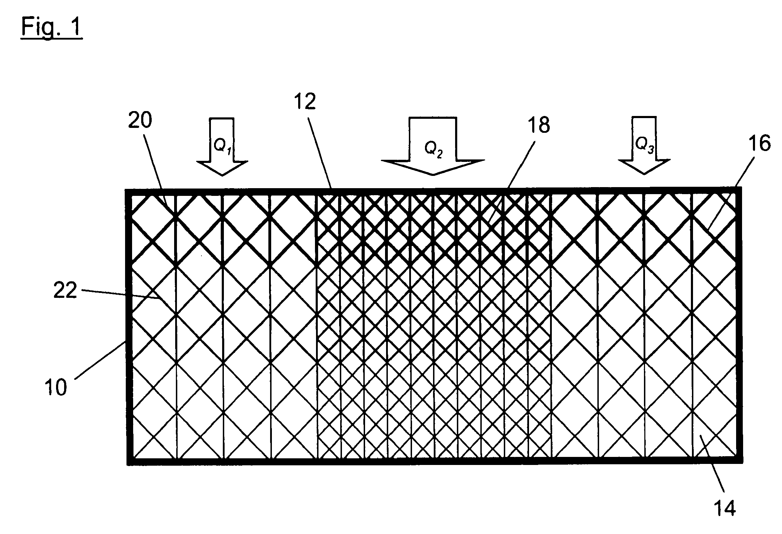

Der in der Fig. 1 gezeigte Wärmespeicher hat ein allseitig geschlossenes Gehäuse mit einer Quaderform. Die in der Figur oben dargestellte Gehäusewand 12 dient als Kontaktfläche zur Aufnahme von drei mit Q₁, Q₂ und Q₃ bezeichneten Wärmeströmen. Insbesondere ist vorgesehen, dass die angedeuteten Wärmeströme nur für eine bestimmte Zeitdauer anfallen, so dass die insgesamt abzuführende Wärmemenge vollständig von dem Phasenwechselmaterial aufgenommen werden kann.

Das Phasenwechselmaterial 14 ist im dargestellten Ausführungsbeispiel ein Paraffin, dass bei Aufnahme einer entsprechenden Wärmemenge aufschmilzt. Es füllt den Innenraum des Gehäuses 10 vollständig aus und umgibt die Wärmeleitstruktur, die aus einem Raumgitter 16 besteht.

Das Raumgitter 16 ist in neun unterschiedliche Teilbereiche unterteilt, von denen beispielhaft drei mit den Bezugszeichen 18, 20 und 22 versehen sind. Das Raumgitter jedes Teilbereichs besteht aus einer dreidimensionalen Anordnung von Stäben, die einen gleichmäßigen Querschnitt aufweisen und an den Gitterpunkten des Raumgitters materialeinheitlich ineinander übergehen. Jede Gitterzelle weist eine feste Anzahl von Stäben auf, die die Gitterpunkte fachwerkartig verbinden. Ein Teil der Stäbe verläuft diagonal.

Die Gestaltung der Raumgitter in den beispielhaft herausgegriffenen Teilbereichen 18, 20, 22 der Wärmeleitstruktur unterscheidet sich einerseits in der Größe der Gitterzellen. Diese sind in den Teilbereichen 20 und 22 ungefähr doppelt so groß wie im Teilbereich 18. Andererseits unterscheiden sich die Querschnitte der verwendeten Stäbe, die im Teilbereich 22 geringer sind als in den beiden Teilbereichen 18 und 20. Durch die genannten Unterschiede des Raumgitters sind die Wärmeleitfähigkeit und die Fähigkeit, die Wärme aus dem Raumgitter in das umgehende Phasenwechselmaterial abzuführen, in den Teilbereichen unterschiedlich und an die jeweiligen Anforderungen angepasst. In der Figur ist hierzu schematisch dargestellt, dass der Wärmestrom Q₂ größer ist als die beiden Wärmeströme Q₁ und Q₃. Entsprechend ist das Raumgitter 18, dass materialeinheitlich in denjenigen Teil der Kontaktfläche 12 übergeht, der den Wärmestrom Q₂ aufnehmen soll, mit einer vergleichsweise hohen Leitfähigkeit versehen. Außerdem ist in der Figur dargestellt, dass der Durchmesser der Stäbe in den jeweiligen Teilbereichen der Wärmeleitstruktur mit zunehmendem Abstand von der Kontaktfläche 12 abnimmt. Diese "Gradierung" wird im Beispiel durch einheitlich gestaltete Teilbereiche der Wärmeleitstruktur erzielt. Grundsätzlich ist jedoch auch ein kontinuierliches Variieren der jeweiligen Gitterparameter möglich. In beiden Fällen wird in der Nähe der Kontaktfläche 12 ein besonders guter Wärmetransport erreicht, während in den weiter von der Kontaktfläche 12 entfernten Teilbereichen der Wärmeleitstruktur die Wärmetransportfähigkeit zugunsten eines erhöhten Volumenanteils des Phasenwechselmaterials verringert ist.

## Patentansprüche

1. Wärmespeicher mit einem Gehäuse (10), in dem ein Phasenwechselmaterial (14) und eine von dem Phasenwechselmaterial (14) umgebene Wärmeleitstruktur angeordnet ist, **dadurch gekennzeichnet, dass** die Wärmeleitstruktur mindestens zwei Teilbereiche aufweist, die jeweils ein Raumgitter (18, 20, 22) aus an den Knotenpunkten des Raumgitters (18, 20, 22) materialeinheitlich ineinander übergehenden Stäben aufweisen, wobei das Verhältnis zwischen Wärmeleitfähigkeit des Raumgitters (18, 20, 22) und Oberflächengröße des Raumgitters (18, 20, 22) bei den beiden Raumgittern (18, 20, 22) unterschiedlich ist und die Stäbe in beiden Raumgittern (18, 20, 22) eine regelmäßige, dreidimensionale Anordnung aufweisen.

2. Wärmespeicher nach Anspruch 1, **dadurch gekennzeichnet, dass** die Abmessungen der Knotenpunkte dem Querschnitt der Stäbe entsprechen.

3. Wärmespeicher nach einem der Ansprüche 1 bis 2, **dadurch gekennzeichnet, dass** die beiden Raumgitter (18, 20, 22) in jeder Gitterzelle mindestens einen diagonal verlaufenden Stab aufweist.

4. Wärmespeicher nach einem der Ansprüche 1 bis 3, **dadurch gekennzeichnet, dass** ein Durchmesser der Stäbe kleiner als 1 mm ist und/oder dass die Größe der Gitterzellen kleiner als 10 mm ist.

5. Wärmespeicher nach einem der Ansprüche 1 bis 4, **dadurch gekennzeichnet, dass** die beiden Raumgitter (18, 20, 22) eine unterschiedliche Topologie aufweisen.

6. Wärmespeicher nach einem der Ansprüche 1 bis 5, **dadurch gekennzeichnet, dass** die Gitterzellen eines der beiden Raumgitter (18, 20, 22) kleiner sind als die Gitterzellen des anderen Raumgitters (18, 20, 22).

7. Wärmespeicher nach einem der Ansprüche 1 bis 6, **dadurch gekennzeichnet, dass** die Stäbe eines der beiden Raumgitter (18, 20, 22) einen anderen Querschnitt aufweisen als die Stäbe des anderen Raumgitters (18, 20, 22).

8. Wärmespeicher nach einem der Ansprüche 1 bis 7, **dadurch gekennzeichnet, dass** eine Kontaktfläche (12) zum Wärmeaustausch mit einer Wärmequelle oder -senke vorhanden ist und das Verhältnis zwischen Wärmeleitfähigkeit der Raumgitter (18, 20, 22) und Oberflächengröße der Raumgitter (18, 20, 22) mit zunehmendem Abstand von der Kontaktfläche (12) kleiner wird.

9. Wärmespeicher nach einem der Ansprüche 1 bis 8, **dadurch gekennzeichnet, dass** geschlossene Wandflächen des Gehäuses (10) und/oder die Kontaktfläche (12) materialeinheitlich in die Wärmeleitstruktur übergehen.

10. Verfahren zur Herstellung eines Wärmespeichers nach Anspruch 1 mit einem Gehäuse (10), in dem ein Phasenwechselmaterial (14) und eine von dem Phasenwechselmaterial (14) umgebene Wärmeleitstruktur angeordnet ist, mit den folgenden Schritten:
a) Bereitstellen eines pulverförmigen Werkstoffs am Ort der herzustellenden Wärmeleitstruktur,
b) Verschmelzen definierter Bereiche des pulverförmigen Werkstoffs durch thermische Einwirkung eines energetischen Strahls,
c) Wiederholen der Schritte a) und b), bis die verschmolzenen Bereiche zwei Teilbereiche mit jeweils einem Raumgitter (18, 20, 22) aus an den Knotenpunkten des Raumgitters (18, 20, 22) materialeinheitlich ineinander übergehenden Stäben bilden, wobei das Verhältnis zwischen Wärmeleitfähigkeit des Raumgitters (18, 20, 22) und Oberflächengröße des Raumgitters (18, 20, 22) bei den beiden Raumgittern (18, 20, 22) unterschiedlich ist und die Stäbe in beiden Raumgittern (18, 20, 22) eine regelmäßige, dreidimensionale Anordnung aufweisen,
d) Entfernen des nicht verschmolzenen pulverförmigen Werkstoffs,
e) Einbringen des Phasenwechselmaterials (14), so dass es die Wärmeleitstruktur umgibt.

11. Verfahren nach Anspruch 10, **dadurch gekennzeichnet, dass** im Schritt a) der pulverförmige Werkstoff in einer dünnen Schicht auf eine horizontale Grundfläche bzw. auf eine zuvor aufgetragene Schicht des pulverförmigen Werkstoffs aufgetragen wird.

12. Verfahren nach Anspruch 10, **dadurch gekennzeichnet, dass** im Schritt a) der pulverförmige Werkstoff gezielt in einer Umgebung des LaserstrahlFokuspunkts zugeführt und Schritt b) im Wesentlichen gleichzeitig ausgeführt wird.

13. Verfahren nach einem der Ansprüche 10 bis 12, **dadurch gekennzeichnet, dass** der pulverförmige Werkstoff im Schritt b) zusätzlich in Bereichen verschmolzen wird, die geschlossene Gehäusewände bilden.

14. Verfahren nach Anspruch 13, **dadurch gekennzeichnet, dass** nach Abschluss des Schritts c) mindestens zwei Öffnungen in den Gehäusewänden verbleiben, durch die das verbleibende Pulver entfernt und das Phasenwechselmaterial (14) eingebracht wird.

## Claims

1. A heat storage device having a housing (10), in which a phase change material (14) and a heat conducting structure surrounded by the phase change material (14) are arranged, **characterized in that** the heat conducting structure comprises at least two partial regions which each comprise a space grid (18, 20, 22) made of bars of the same material which merge into one another at the junctions of the space grid (18, 20, 22), wherein the ratio between the heat conductivity of the space grid (18, 20, 22) and the surface area of the space grid (18, 20, 22) is different for the two space grids (18, 20, 22), and the bars in both space grids (18, 20, 22) have a regular, three-dimensional arrangement.

2. The heat storage device according to Claim 1, **characterized in that** the dimensions of the junctions correspond to the cross-section of the bars.

3. The heat storage device according to any one of Claims 1 to 2, **characterized in that** the two space grids (18, 20, 22) in each grid cell comprise at least one diagonally extending bar.

4. The heat storage device according to any one of Claims 1 to 3, **characterized in that** one diameter of the bars is less than 1 mm and/or that the size of the grid cells is less than 10 mm.

5. The heat storage device according to any one of Claims 1 to 4, **characterized in that** the two space grids (18, 20, 22) comprise a different topology.

6. The heat storage device according to any one of Claims 1 to 5, **characterized in that** the grid cells of one of the two space grids (18, 20, 22) are smaller than the grid cells of the other space grid (18, 20, 22).

7. The heat storage device according to any one of Claims 1 to 6, **characterized in that** the bars of one of the two space grids (18, 20, 22) have a different cross-section to the bars of the other space grid (18, 20, 22).

8. The heat storage device according to any one of Claims 1 to 7, **characterized in that** a contact surface (12) for exchanging heat and having a heat source or a heat sink is provided, and the ratio between the heat conductivity of the space grids (18, 20, 22) and the surface area of the space grids (18, 20, 22) becomes smaller as the distance from the contact surface (12) increases.

9. The heat storage device according to any one of Claims 1 to 8, **characterized in that** closed wall surfaces of the housing (10) and/or the contact surface (12) of the same material merge into the heat conducting structure.

10. A method for manufacturing a heat storage device according to Claim 1 having a housing (10), in which a phase change material (14) and a heat conducting structure surrounded by the phase change material (14) are arranged, comprising the following steps:
a) Supplying of a powdery material at the location of the heat conducting structure which is to be manufactured,
b) Fusing of defined regions of the powdery material by the thermal effect of an energetic beam,
c) Repeating of steps a) and b) until the fused regions form two partial regions which each comprise a space grid (18, 20, 22) made of bars of the same material which merge into one another at the junctions of the space grid (18, 20, 22), wherein the ratio between the heat conductivity of the space grid (18, 20, 22) and the surface area of the space grid (18, 20, 22) is different for the two space grids (18, 20, 22), and the bars in both space grids (18, 20, 22) have a regular, three-dimensional arrangement,
d) Removing of the non-fused powdery material,
e) Introducing of the phase change material (14), so that it surrounds the heat conducting structure.

11. The method according to Claim 10, **characterized in that** the powdery material is applied in a thin layer onto a horizontal base or onto a previously applied layer of the powdery material in step a).

12. The method according to Claim 10, **characterized in that** the powdery material is selectively fed into the surroundings of the laser beam focal point in step a) and is substantially simultaneously removed in step b).

13. The method according to any one of Claims 10 to 12, **characterized in that** the powdery material is additionally fused in regions which form closed housing walls in step b).

14. The method according to Claim 13, **characterized in that** following the completion of step c) at least two openings remain in the housing walls, through which the remaining powder is removed and the phase change material (14) is introduced.

## Revendications

1. Accumulateur thermique avec un logement (10) dans lequel un matériau à changement de phase (14) et une structure thermoconductrice entourée du matériau à changement de phase (14) sont disposés, **caractérisé en ce que** la structure thermoconductrice présente au moins deux régions partielles qui présentent chacune un réseau spatial (18, 20, 22) de bâtons se transformant les uns en les autres de manière uniforme au niveau du matériau aux noeuds du réseau spatial (18, 20, 22), dans lequel le rapport entre thermoconductivité du réseau spatial (18, 20, 22) et taille superficielle du réseau spatial (18, 20, 22) est différent pour les deux réseaux spatiaux (18, 20, 22), et les bâtons dans les deux réseaux spatiaux (18, 20, 22) présentent un agencement tridimensionnel régulier.

2. Accumulateur thermique selon la revendication 1, **caractérisé en ce que** les dimensions des noeuds correspondent à la section transversale des bâtons.

3. Accumulateur thermique selon une des revendications 1 à 2, **caractérisé en ce que** les deux réseaux spatiaux (18, 20, 22) présentent dans chaque cellule de réseau au moins un bâton s'étendant en diagonale.

4. Accumulateur thermique selon une des revendications 1 à 3, **caractérisé en ce qu'**un diamètre des bâtons est inférieur à 1 mm et/ou que la taille des cellules de réseau est inférieure à 10 mm.

5. Accumulateur thermique selon une des revendications 1 à 4, **caractérisé en ce que** les deux réseaux spatiaux (18, 20, 22) présentent une topologie différente.

6. Accumulateur thermique selon une des revendications 1 à 5, **caractérisé en ce que** les cellules de réseau d'un des deux réseaux spatiaux (18, 20, 22) sont inférieures aux cellules de réseau de l'autre réseau spatial (18, 20, 22).

7. Accumulateur thermique selon une des revendications 1 à 6, **caractérisé en ce que** les bâtons d'un des deux réseaux spatiaux (18, 20, 22) présentent une autre section transversale que les bâtons de l'autre réseau spatial (18, 20, 22).

8. Accumulateur thermique selon une des revendications 1 à 7, **caractérisé en ce qu'**une face de contact (12) est présente pour l'échange thermique avec une source de chaleur ou un dissipateur thermique et le rapport entre thermoconductivité des réseaux spatiaux (18, 20, 22) et taille superficielle des réseaux spatiaux (18, 20, 22) est inférieur avec un écart croissant de la face de contact (12).

9. Accumulateur thermique selon une des revendications 1 à 8, **caractérisé en ce que** des faces de paroi fermées du logement (10) et/ou la face de contact se transforment en la structure thermoconductrice de manière uniforme au niveau du matériau.

10. Procédé de fabrication d'un accumulateur thermique selon la revendication 1 avec un logement (10) dans lequel un matériau à changement de phase (14) et une structure thermoconductrice entourée du matériau à changement de phase (14) sont disposés, avec les étapes suivantes :
a) mettre à disposition un matériau pulvérulent sur le site de la structure thermoconductrice à fabriquer,
b) fusionner des régions définies du matériau pulvérulent par action thermique d'un rayon énergétique,
c) répéter les étapes a) et b) jusqu'à ce que les régions fusionnées forment deux régions partielles avec chacune un réseau spatial (18, 20, 22) de bâtons se transformant les uns en les autres de manière uniforme au niveau du matériau aux noeuds du réseau spatial (18, 20, 22), dans lequel le rapport entre thermoconductivité du réseau spatial (18, 20, 22) et taille superficielle du réseau spatial (18, 20, 22) est différent pour les deux réseaux spatiaux (18, 20, 22), et les bâtons dans les deux réseaux spatiaux (18, 20, 22) présentent un agencement tridimensionnel régulier,
d) éliminer le matériau pulvérulent non fusionné,
e) introduire le matériau à changement de phase (14) de sorte qu'il entoure la structure thermoconductrice.

11. Procédé selon la revendication 10, **caractérisé en ce que** le matériau pulvérulent est appliqué à l'étape a) en une couche mince sur une face de base horizontale ou sur une couche appliquée auparavant du matériau pulvérulent.

12. Procédé selon la revendication 10, **caractérisé en ce que** le matériau pulvérulent est amené à l'étape a) de manière ciblée dans un environnement du foyer de rayon laser et l'étape b) est réalisée essentiellement simultanément.

13. Procédé selon une des revendications 10 à 12, **caractérisé en ce que** le matériau pulvérulent est en outre fusionné à l'étape b) dans des régions qui forment des parois de logement fermées.

14. Procédé selon la revendication 13, **caractérisé en ce qu'**au moins deux ouvertures restent dans les parois de logement après la fin de l'étape c) à travers lesquelles la poudre restante est éliminée et le matériau à changement de phase (14) est introduit.
